(19) Europäisches Patentamt
European Patent Office
Office européen des brevets

(11) **EP 1 648 833 B1**

(12) **EUROPÄISCHE PATENTSCHRIFT**

(45) Veröffentlichungstag und Bekanntmachung des Hinweises auf die Patenterteilung:
**16.11.2011 Patentblatt 2011/46**

(21) Anmeldenummer: 04735224.0

(22) Anmeldetag: **28.05.2004**

(51) Int Cl.:
***C02F 11/14*** *(2006.01)*

(86) Internationale Anmeldenummer:
**PCT/EP2004/005803**

(87) Internationale Veröffentlichungsnummer:
**WO 2005/019122 (03.03.2005 Gazette 2005/09)**

(54) **VERFAHREN ZUR BEHANDLUNG VON WÄSSRIGEM SCHLAMM**

METHOD FOR TREATING AQUEOUS SLUDGE

PROCEDE DE TRAITEMENT DE BOUES AQUEUSES

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**LT LV**

(30) Priorität: **22.07.2003 DE 10333478**

(43) Veröffentlichungstag der Anmeldung:
**26.04.2006 Patentblatt 2006/17**

(73) Patentinhaber:
• **Ashland Licensing and Intellectual Property LLC Dublin, OH 43017 (US)**
• **Detlef Hegemann GmbH & Co. Kg 28309 Bremen (DE)**

(72) Erfinder:
• **BUDDENBERG, Thorsten 47899 Krefeld (DE)**
• **HERRMANN, Holger 47239 Duisburg (DE)**
• **PAWEL, Hartmut 32457 Porta Westfalica (DE)**

• **SCHROERS, Otto 47807 Krefeld (DE)**
• **HÖPPNER, Wolfgang 28357 Bremen (DE)**
• **HARTMANN, Volker 27321 Thedinghausen (DE)**

(74) Vertreter: **Bülle, Jan Kutzenberger & Wolff Patentanwaltssozietät Theodor-Heuss-Ring 23 50668 Köln (DE)**

(56) Entgegenhaltungen:
**EP-A- 0 500 199     DE-A- 19 726 899
GB-A- 1 466 185     US-A- 5 462 672
US-B1- 6 221 956**

• **RAO S RAMACHANDRA: "FLOCCULATION AND DEWATERING OF ALBERTA OIL SANDS TAILINGS" INT J MINER PROCESS OCT 1980, Bd. 7, Nr. 3, Oktober 1980 (1980-10), Seiten 245-253, XP009035430**

EP 1 648 833 B1

## Beschreibung

Die vorliegende Erfindung betrifft ein Verfahren gemäß Anspruch 1.

Mit der Strömung von Flüssen werden ständig anorganische und organische Sedimente flussabwärts transportiert. Diese Sedimente lagern sich in den Flüssen und Häfen ab. In der GB 1,116,290 wird vorgeschlagen, in tiefere Schichten dieser Sedimente Polymerlösungen einzuspülen und dadurch Flockungsvorgänge einzuleiten, die insgesamt zu einer Lockerung der Ablagerungen und zu deren natürlichem Abtransport durch Wasserströmungen führen. Als Polymere werden unter anderem Polyacrylsäure und Polyacrylamid genannt. Copolymere enthalten mindestens 50 Mol% Acrylsäure oder Methacrylsäure. Weiterhin werden auch kationische Polymere als geeignet beschrieben.

Heutzutage ist es jedoch üblich, diese Sedimente aus dem Wasser durch Ausbaggerungen zu entfernen. Die Sedimente enthalten häufig umweltgefährdende Bestandteile in Form von z.B. komplexgebundenen Schwermetallionen oder organischen Schadstoffen, die eine, früher häufig angewandte Verklappung in tieferen Bereichen der Gewässer nicht mehr zulässt und eine umweltverträgliche Endlagerung an Land erforderlich macht.

Um eine ordnungsgemäße Endlagerung zu ermöglichen, müssen die Sedimente, die je nach Herkunft bis zu 20 Gew.% organische Anteile enthalten können, entsprechend aufbereitet werden. Nach den derzeit in der Praxis durchgeführten Verfahren werden die ausgebaggerten Sedimentschlämme in Schuten zu den für die Schlammbehandlung vorgesehenen Einrichtungen transportiert und mit Geschwindigkeiten von 1000 bis 6000 $m^3$/h durch Rohrleitungen in entsprechende Entwässerungsfelder gespült. Die Entwässerung der Schlämme erfolgt im Zuge der Sedimentation durch Versickerung in Drainagen, durch Ablassen des sich bei der Sedimentation bildenden Überstandswassers und durch natürliche Trocknung. Nach Erreichen einer halbfesten Konsistenz wird die Trocknung des Schlammes durch mehrfache mechanische Umlagerung fortgesetzt (DE 197 26 899 A1, Heinrich Girdes GmbH, 1998).

Der zusätzliche Feuchtigkeitseintrag aufgrund von Witterungseinflüssen führt zu einer erneuten Durchfeuchtung der Schlämme und damit zu einer Verzögerung des Trocknungsvorganges. Je nach Standort kann bis zu über 8 Monate im Jahr der Regeneintrag die Verdunstungstrocknung aufheben. Der gesamte Vorgang der Schlammaufbereitung benötigt bis zu einem Jahr und kann sich durch höhere Anteile feinteiliger Schlammfraktionen von 0,06 mm und kleiner deutlich auf bis zu 18 Monate verlängern, deren Ablagerungen für Wasser nahezu undurchlässige Sedimentschichten bilden und eine Versickerung über Drainageeinrichtungen blockieren. (siehe auch Prof. Fritz Gehbauer, Institut für Maschinenwesen im Baubetrieb, Universität Fridericiana, imb Veröffentlichung, Reihe V/Heft 20, Nassbaggertechnik, Kap. 3.2. Definitionen, Seite 29) Aufgrund der niedrigeren Dichte feinteiliger Schlämme weisen die Entwässerungsbecken bei gleicher Füllung weniger Trockensubstanz auf, d.h. der Schlammdurchsatz ist gegenüber grobteiligen Schlämmen reduziert. Zur Erzielung einer ausreichenden FlügelScherfestigkeit, die für die Weiterverarbeitung getrockneter Schlämme erforderlich ist, muss der feinteilige Schlamm auf einen Wassergehalt von 60 Gew.% getrocknet werden, während grobteiliger Schlamm bereits bei 65 bis 70 Gew.% die Festigkeitsanforderungen erfüllt.

In der US 3,312,070 (Dailchi Kogyo Seiyaku Kabushiki Kaisha, 1967) wird die Verwendung von koagulierend wirkenden oberflächenaktiven Hilfsmitteln bei der Gewinnung von Schlämmen vorgeschlagen, die ohne diese Hilfsmittel zur Separierung von Fein- und Grobanteilen neigen. Als Folge davon ergeben sich unterschiedliche Materialeigenschaften der wiedergewonnenen Schlämme. Beispielhaft werden in der Patentschrift u.a. Reaktionsprodukte aus Acrylamid und Carboxymethylcellulose, Polyacrylamid, Polyvinylalkohol, Mischungen aus Polyacrylamid mit Anilin-Harnstoff-Formaldehydharzen und sulfomethyliertes Polyacrylamid verwendet. Die Hilfsmittel werden in die Zuführungsleitung der Schlämme zu den Absetzbecken dosiert.

In der EP 346 159 A1 (Aoki Corp., 1989) wird ausgeführt, dass das Verfahren der konventionellen Schlammentwässerung, bei der die negativ geladenen

Schlammteilchen mit kationischen Salzen oder kationischen Polymeren behandelt werden, unvorteilhaft bezüglich Flockungseffektivität und Kosten ist. Alternativ wird die aufeinanderfolgende Zugabe von einem anionischen und einem kationischen polymeren Koagulationsmittel und gegebenenfalls eines weiteren anionischen Flockungsmittels zur Schlammentwässerung vorgeschlagen. Aufgrund der praktischen Gegebenheiten, wonach die Flockungsmittel dem schnellen Strom wässrigen Schlammes vor dem Eintritt in das Schlammabsetzbecken zugemischt werden, ist die erfolgreiche aufeinander abgestimmte Dosierung zweier bzw. dreier verschiedener Flockungsmittel und deren Wechselwirkung zur Ausbildung sedimentierender Schlammflocken nicht gewährleistet.

Der EP 0 500 199 B1 (Detlef Hegemann GmbH&Co., 1996) ist ein Verfahren zur Aufbereitung der kontaminierten Gewässersedimente zu einem dauerhaft umweltverträglichen Baumaterial zu entnehmen, bei dem die Sedimente nach Trocknung auf einen Wassergehalt von ca. 120 bis 140% mit Tonmaterialien und Zement/Kalkhydrat zu einem umweltverträglichen Baumaterial geformt werden.

US-A-5462672 offenbart ein Verfahren zur Entwässerung von Schlamm: der Schlamm wird zuerst auf eine Dichte zwischen 1.15 und 1.35 durch Zugabe von Wasser eingestellt. Die Zugabe von Wasser wird über eine Messeinrichtung kontrolliert. Danach werden ein anorganisches sowie ein polymeres anionisches Flockungsmittel zudosiert und der Schlamm wird zu einer Entwässerungsmaschine (25) geleitet. Der getrocknete Schlamm wird anschließend abtransportiert. Das benutzte anionische polymere Flockungsmittel ist teilweise hydrolysiertes Polyacrylamid.

EP-A-0500199 offenbart ein Verfahren zur Aufbereitung von Gewässersedimenten zu Baumaterial. Dabei wird 4-15% kaolinitisches Tonmehl zugegeben.

Aufgabe der vorliegenden Erfindung ist es, ein Verfahren zur Entwässerung von Schlämmen aus Flüssen und Häfen und Watt bzw. Meeresboden zur Verfügung zu stellen, das eine schnelle und kostengünstige Entwässerung erlaubt und möglichst einfach in den vorhandenen Anlagen der Feldentwässerung durchzuführen ist. In Anbetracht der hohen Fördergeschwindigkeiten der Schlämme und der dabei auftretenden hohen Scherbeanspruchungen soll das bereitzustellende Verfahren zu einer schnellen Flockung und zu einer stabilen Flocke führen. Insbesondere soll das Verfahren auch bei den Schlämmen vorteilhaft angewendet werden können, die aufgrund ihrer Feinanteile besonders schwierig zu entwässern sind.

Bei der Durchführung des Verfahrens ist in Bezug auf die Weiterverwendung der getrockneten Schlämme auch auf die Vermeidung umweltschädigender Produkte zu achten.

Ferner ist es eine Aufgabe des bereitzustellenden Verfahrens, die Zeit für die natürliche Trocknung des nach Abtrennung des Überstandswassers und des Drainage-Wassers teilentwässerten Schlammes zu minimieren. Eine weitere Aufgabe der Erfindung besteht darin, die in den wässrigen Schlämmen vorhandenen Schadstoffe so fest an die entwässerten Schlämme zu binden, dass eine nachträgliche Zugabe von Schadstoffe bindenden Substanzen reduziert oder vermieden werden kann und die getrockneten Schlämme direkt weiterverarbeitet oder deponiert werden können.

Die Aufgabe wird erfindungsgemäß gelöst durch ein Verfahren zur Entwässerung von Schlamm, gemäß Anspruch 1.

Die erfindungsgemäß zu verwendenden anionischen Polymerisate weisen ein Molekuargewichtsmittel $M_w$ von größer $1,0x10^7$, vorzugsweise größer $1,2x10^7$ und besonders bevorzugt größer $1,5x10^7$ auf.

Die erfindungsgemäß zu verwendenden anionischen Polymerisate sind aus wasserlöslichen, nichtionischen und anionischen Monomerbestandteilen gebildet. Beispiele für einzusetzende nichtionische Monomere sind Acryl- und Methacrylamid, die Hydroxyalkylester der Acryl- und Methacrylsäure, vorzugsweise 2-Hydroxyethyl- und 2-Hydroxypropylester, Acrylnitril, Vinylpyrrolidon und N-Vinylacetamid und deren Mischungen. Bevorzugt wird Acrylamid verwendet.

Beispiele für einzusetzende anionische Monomere sind ungesättigte Mono- und Dicarbonsäuren, wie Acrylsäure, Methacrylsäure, Itaconsäure, Maleinsäure, Fumarsäure, Vinylsulfonsäure, Acrylamidoalkansulfonsäuren, Vinylphosphonsäure und/oder deren Salze mit Alkalien, Ammoniak, (Alkyl)Aminen- oder Alkanolaminen und Gemische dieser Monomeren. Bevorzugt wird Acrylsäure und deren Alkalisalz verwendet.

Die erfindungsgemäß einzusetzenden Polymere können zur Modifizierung der Polymereigenschaften bis zu 10 Gew.% weitere, nicht oder gering wasserlösliche Monomere enthalten, sofern diese die Wasserlöslichkeit des Polymerisates nicht beeinträchtigen. Beispiele für solche Monomere sind Vinylacetat und Alkylacrylate, wie Methylacrylat, Ethylacrylat, Butylacrylat, Ethylhexylacrylat.

Der Anteil anionischer Monomerbestandteile in den erfindungsgemäß zu verwendenden anionischen Polymerisaten beträgt 5 bis 30 Gew.% und besonders bevorzugt 10 bis 20 Gew.%.

Bezüglich der etwas gröberen Schlämme hat es sich herausgestellt, dass in manchen Fällen ein anionisches Polyacrylamid mit einem anionischen Anteil von 30 bis 40 Gew. eine besonders gute Flockungswirkung zeigt.

In einer weiteren vorteilhaften Ausführungsform der Erfindung wird ein Gemisch aus zwei verschiedenen anionischen Flockungsmitteln eingesetzt, wobei die Unterschiede sowohl in der chemischen Struktur der anionischen Monomerkomponenten als auch in den Gewichtsanteilen der anionischen Monomerkomponenten liegen können. Bevorzugt ist die Verwendung eines Gemisches aus Polymeren mit unterschiedlichen Gewichtsanteilen an anionischen Monomerbestandteilen.

Alternativ zu den aus nichtionischen und anionischen Monomeren synthetisierten Polymerisaten können auch solche Polymere verwendet werden, die ursprünglich aus nichtionischen Monomerbestandteilen gebildet wurden und in denen anionische Gruppen durch teilweise Hydrolyse, von etwa ester- und/oder amidartigen nichtionischen Bestandteilen erzeugt wurden. Beispielsweise sei hierzu ein durch Hydrolyse von Polyacrylamidhomopolymer erzeugtes anionisches Polyacrylamid genannt.

Die anionischen Polyacrylamide können nach verschiedenen Polymerisationsverfahren hergestellt sein, beispielsweise nach dem Gelpolymerisationsverfahren, bei dem die wässrige Monomerenlösung nach Initiierung adiabatisch zu einem Gel polymerisiert, dieses anschließend zerkleinert, getrocknet und zu Polymerpulver gemahlen wird. Zur Verbesserung des Löseverhaltens werden die Polymerpulver oftmals an der Oberfläche beschichtet, etwa mit feinteiligen Aerosilen oder aber auch mit Wasserglas. Ferner können die Polymere auch in Form einer Wasser-in-Öl-Dispersion vorliegen, die vor der Anwendung in ein Öl-in-Wasser-Dispersion invertiert wird. Bevorzugt wird eine wässrige Lösung von Pulverpolymeren eingesetzt.

Die wässrige Polymerlösung wird durch Auflösen bzw. Verdünnen von pulverigen Polymerisaten oder emulsionsförmigen Polymerisaten hergestellt und als verdünnte Lösung eingebracht. Die Konzentration der Polymerlösung liegt üblicherweise unter 2 Gew.%, vorzugsweise unter 1% und besonders bevorzugt unter 0,5 Gew.%.

Der beispielsweise aus Flüssen und Häfen, dem Meeresboden oder dem Watt ausgebaggerte Schlamm wird mit Wasser auf eine pumpfähige Konzentration gebracht, auf eine Dichte von 1,04 t/m³ bis 1,15 t/m³ und durch Rohrleitungen zu den Schlammentwässerungsfeldern gefördert. In den Rohrleitungen befindet sich eine Messeinrichtung, die die aktuelle Schlammkonzentration ermittelt. Mit dem Messsignal wird die erforderliche Flockungsmittelmenge berechnet und die Dosierung des Flockungsmittels ausgelöst.

Die anionischen Polymerisate werden den wässrigen Schlämmen als wässrige Lösung zugesetzt, wobei der Zusatz in die Zuleitung des wässrigen Schlammes zum Entwässerungsbecken erfolgt. Die Durchmischung der Polymerlösung mit dem Schlamm erfolgt durch die Turbulenzen in der strömenden Aufschlämmung und kann gegebenenfalls durch Mischelemente, vorzugsweise statische Mischelemente, gefördert werden. Der Zugabepunkt der Polymerlösung in die Schlammzuleitung kann so gewählt werden, dass der Flockungsprozess beim Eintritt in das Entwässerungsbecken bereits eingesetzt hat oder erst beginnt.

Überraschenderweise hat es sich herausgestellt, dass die nach dem erfindungsgemäßen Verfahren erzeugten Flocken sehr stabil sind und dadurch eine Zerstörung von bereits gebildeten Flocken durch Reibungseffekte während der Schlammförderung vermieden wird. Aufgrund der hohen Stabilität der nach dem erfindungsgemäßen Verfahren erzeugten Flocken kann der Zugabepunkt der Flockungsmittellösung in den Schlammstrom auch weit vor der Einmündung in das Absetzbecken erfolgen. Aufgrund der rasch einsetzenden Schlammflockung ist es auch möglich, das Flockungsmittel erst bei der Einmündung in das Absetzbecken zuzudosieren. In einer bevorzugten Ausführungsform erfolgt die Dosierung des Flockungsmittels auf einer kurzen Mischstrecke vor der Einmündung, insbesondere unterhalb von 20m.

Die für das erfindungsgemäße Verfahren erforderliche Menge an anionischem Polymerisat hängt von der Konzentration und der Zusammensetzung der Schlämme ab und kann durch einfache Vorversuche ermittelt werden. Bezogen auf den im Schlamm enthaltenden Feststoffanteil werden üblicherweise 0,02 bis 2 Gew.%, vorzugsweise 0,05 bis 1 Gew.% und besonders bevorzugt 0,09 bis 0,5 Gew.% polymeres Flockungsmittel zugesetzt.

Die Lösung der Aufgabe durch das erfinderische Verfahren ist insofern überraschend, als es die Flockung und Sedimentation der negativ geladenen Schlammteilchen durch die alleinige Verwendung anionischer Flockungsmittel ohne Zusatz weiterer Flockungshilfsmittel erlaubt. Insbesondere lassen sich auch Schlämme mit Feinanteilen vorteilhaft verarbeiten, da die sich ausbildende Flockenstruktur eine Blockierung der Drainage-Entwässerung nicht mehr behindert.

Die durch das erfinderische Verfahren erzielten Zeitvorteile sind beträchtlich. Ausgehend von eine Rohdichte des für die Behandlung vorgesehenen Schlammes von ca. 1,04 t/m$^3$ bis 1,15 t/m$^3$ kann im **konventionellen** Verfahren ohne Flockungshilfsmittel mit groben Schlämmen nach etwa 2 - 7 Wochen und bei feinen Schlämmen nach ca. 4 Monaten das Überstandswasser abgelassen werden, der Schlamm hat dann eine Dichte von etwa 1,16 t/m$^3$ bei feinteiligen Schlämmen und 1,22 t/m$^3$ bei gröberen Schlämmen erreicht. Feinteilige Schlämme im Sinne der vorliegenden Offenbarung sind Schlämme, deren Anteil an Partikeln von 0,06 mm und kleiner mindestens 50 Gew.% beträgt. Zu diesem Zeitpunkt setzt dann die mechanische Umwälzung ein, um die natürliche Trocknung durch Verdunstung zu befördern. Dieser Vorgang wird dann je nach Jahreszeit und Wetterlage nach einigen Monaten beendet, der Schlamm weist zu diesem Zeitpunkt eine Dichte von etwa 1,47 t/m$^3$ auf und kann der Endverwertung zugeführt werden. Im **erfinderischen** Verfahren kann das Überstandswasser bereits innerhalb der ersten 24 h abgelassen werden und es ergibt sich zusammen mit der verbesserten Drainage-Entwässerung ein deutlich trockenerer Schlamm. Der Schlamm weist bereits zu diesem Zeitpunkt eine Dichte von 1,25 bis 1,35 t/m$^3$ auf und kann dann entweder direkt der Weiterverarbeitung zugeführt oder durch Verdunstungstrocknung, gegebenenfalls gekoppelt mit mechanischer Bearbeitung noch stärker getrocknet werden. Üblicherweise werden nach der Verdunstungstrocknung Dichten von über 1,45 t/m$^3$, vorzugsweise von 1,47 t/m$^3$ oder größer eingestellt. Die in dem erfindungsgemäßen Verfahren anfallenden getrockneten Schlämme weisen Flügelscherfestigkeiten von über 25 kN/m$^2$, vorzugsweise von über 30 kN/m$^2$ auf.

Die mechanische Bearbeitung des Schlammes führt zu einem regelmäßigen Aufbrechen der Schlammoberfläche, wodurch die Verdunstungstrocknung beschleunigt wird. Die Bearbeitung kann beispielsweise durch Bagger erfolgen, die den Schlamm regelmäßig umlagern oder aber durch Fräsen, die die Oberfläche des Schlammes sehr intensiv bearbeiten. Erfindungsgemäß werden Fräsen bevorzugt eingesetzt.

Im erfindungsgemäßen Verfahren wird das im Entwässerungsfeld von der Oberfläche und durch Drainage abgetrennte Wasser über Ringleitungen wieder an die Schlammübergabestelle zurückgeführt und erneut zur Verdünnung des angelieferten Schlammes verwendet.

Der nach Abtrennung von Überstands- und Drainagewasser teilentwässerte Schlamm zeigt überraschenderweise nur eine geringe Neigung neu hinzukommendes Wasser wieder aufzunehmen. Aufgrund dieser Eigenschaft wird die witterungsbedingte Verlängerung der natürlichen Schlammtrocknung deutlich reduziert, da sich z.B. Regenwasser weitgehend nur noch im Oberflächenbereich des sedimentierten Schlammes ansammelt und den Schlamm nicht mehr erneut durchfeuchtet bzw. aufschlämmt.

Nach Erreichung des gewünschten Trocknungsgrades werden die Schlämme auf Deponien gelagert oder zu einem umweltverträglichen Baumaterial verarbeitet, beispielsweise zu einem Dichtungsmaterial, zu Randdämmen oder zu Straßenbefestigungen. Produkte, hergestellt nach dem erfindungsgemäßen Verfahren weisen vorteilhafte Materialeigenschaften auf.

Da die im wässrigen Schlamm vorhandenen Schadstoffe in die im erfindungsgemäßen Verfahren gebildeten Flocken eingeschlossen werden, kann der Zusatz von Schadstoffe bindenden Substanzen reduziert werden oder aber völlig unterbleiben. Die Schlämme können somit nach ihrer Trocknung direkt deponiert oder aber zu Baumaterial weiterverarbeitet werden.

Durch die Verwendung anionischer Polyacrylamide erfolgt keine umweltschädliche Belastung des Schlammes, so dass eine problemlose Weiterverarbeitung möglich ist.

Bei der Weiterverarbeitung von hochkontaminierten Schlämmen zu einem umweltverträglichen Baumaterial hat sich der Zusatz von mineralischen Füllstoffen, insbesondere von Tonen, Kalkhydrat und Zement oder deren Mischungen als vorteilhaft erwiesen. Insbesondere werden jeweils 1 bis 15 Gew.% dieser Stoffe in den Schlamm homogen eingemischt.

## Bestimmungsmethoden

### Entwässerung nach der Siebtestmethode

Mit dieser Methode werden polymere Flockungsmittel bezüglich ihrer Eignung zur Konditionierung und Entwässerung von Schlämmen geprüft.

In einem 700 ml Messbecher werden 500 ml Schlamm mit der zu prüfenden 0,25 %igen Flockungsmittellösung versetzt und mit einem 4-Fingerrührer bei 1000 U/min für eine bestimmte Zeit gerührt. Nach dieser Konditionierung wird die Schlammprobe auf einem Metallsieb (200 Mikrometer Maschenweite) filtriert (= entwässert). Gemessen wird die Entwässerungsdauer für eine Filtratmenge von 200 ml und das abgelaufene Filtrat in seiner Klarheit in einem Klärkeil optisch beurteilt.

Klarheit "0" = keine Klärung
Klarheit "46" = beste Klärung

### Sedimentationsversuch

In einem 600 ml Becherglas werden 500 ml Schlick und eine bestimmte Menge 0,25%ige Flockungsmittellösung mit einem 4-Fingerrührer bei 1000 U/Min. für 10 Sekunden gerührt. Man beurteilt in Abhängigkeit von der Sedimentationszeit (Min) das sich ausbildende Volumen (ml) an geklärtem Wasser über dem Sediment.

### Flügelscherfestigkeit

Die Messung der Scherfestigkeit des entwässerten Schlammes erfolgt mit einer Flügelsonde. Die Flügelsonde besteht aus einem Stab, an dessen unterem Ende 4 Flügel angeordnet sind. Die Abmessungen und die Arbeitsweise sind nach DIN 4096 genormt. Für die Versuchsdurchführung wird die Flügelsonde in den Schlamm eingedrückt und langsam bis zum Bruch des Schlammes entlang einer zylindrischen Gleitfläche gedreht. Aus dem beim Bruch gemessenen Drehmoment M und des Durchmessers d der Flügelsonde wird die Flügelscherfestigkeit berechnet.

$$FS = 6 \times M / 7 \times \pi \times d^3$$

### Beispiele

### Verwendete Polymere

Die verwendeten anionischen Polymere weisen alle ein mittleres Molekulargewicht Mw von über 15 Mio: auf, die kationischen Polymere haben ein Mw von über 6 Mio. Alle Polymere werden in Form ihrer 0,25 Gew.%igen Lösungen eingesetzt.

Polymer A: Kationisches Polyacrylamid mit einem 25 Gew.%-Anteil quaternisiertem Dimethylaminopropylacrylamid
Polymer B: Kationisches Polyacrylamid mit einem 10 Gew.%- Anteil quaternisiertem Dimethylaminopropylacrylamid
Polymer C: Kationisches Polyacrylamid mit einem 6 Gew.%-Anteil quaternisiertem Dimethylaminopropylacrylamid
Polymer D: Anionisches Polyacrylamid mit einem 1,5 Gew.%-Anteil Acrylsäure-Na-Salz (nicht gemäß Erfindung)
Polymer E: Anionisches Polyacrylamid mit einem 10 Gew.%-Anteil Acrylsäure-Na-Salz
Polymer F: Anionisches Polyacrylamid mit einem 15 Gew.%-Anteil Acrylsäure-Na-Salz
Polymer G: Anionisches Polyacrylamid mit einem 40 Gew.%-Anteil Acrylsäure-Na-Salz (nicht gemäß Erfindung)

**Schlammprobe 1**

Hier wurde Hafenschlick aus Bremen mit einer Konzentration von 10,3 % Trockensubstanz eingesetzt, was einer Dichte von 1,066 t/m$^3$ entsprach. Die durchschnittliche Teilchengröße betrug Dm = 0,0564 mm, ermittelt über das Diagramm Körnungslinie, aus dessen halblogrithmischer Auftragung von log Teilchendurchmesser gegen Teilchenmasseanteil. Der Anteil von Partikeln unter 0,06 mm betrug 70 Gew.%. Die Partikelladung war negativ und wurde mit dem PCD 03 pH-Gerät der Fa. Mütek, (aus Herrsching, DE) durch eine Polyelektrolyttitration bis zum isoelektrischen Punkt bestimmt. Der Meßwert lag bei - 230 mV. Der Glühverlust der Trockensubstanz betrug 13,2 %, ermittelt bei 600°C/2,5 h.

**Schlammprobe 2**

Hier wurde Hafenschlick aus Bremerhaven mit einer Konzentration von 9,5 % Trockensubstanz eingesetzt, was einer Dichte von 1,062 t/m$^3$ entsprach. Die durchschnittliche Teilchengröße betrug Dm = 0,0212 mm, ermittelt über das Diagramm Körnungslinie, aus dessen halblogrithmischer Auftragung von log Teilchendurchmesser gegen Teilchenmasseanteil. Der Anteil an Partikeln unter 0,06 mm betrug 100 Gew.%. Die Partikelladung war negativ und wurde mit dem PCD 03 pH-Gerät der Fa. Mütek, (aus Herrsching, DE) durch eine Polyelektrolyttitration bis zum isoelektrischen Punkt bestimmt. Der Messwert lag bei - 410 mV. Der Glühverlust der Trockensubstanz betrug 15,5 %, ermittelt bei 600°C/2,5 h.

Beispiel 1

500 ml Schlammprobe 2 wurde im Sedimentationsversuch mit 40 ml Polymerlösung versetzt und 10 sec geschert. Nach 1 Minute Sedimentationszeit ergaben sich folgende Volumina geklärten Wassers:

| Polymer | Volumen [ml] geklärtes Wasser |
|---|---|
| B | 5 |
| C | 20 |
| D | 210 |
| E | 240 |
| F | 260 |
| G | 25 |
| ohne | 0 |

Wiederholt man den Versuch bei erhöhter Scherung (30 sec geschert), so ergeben sich nach 1 und 2 Minuten Sedimentationszeit folgende Volumina geklärten Wassers:

| Polymer | Volumen [ml] geklärtes Wasser | |
|---|---|---|
| | nach 1 Min | nach 2 Min |
| B | 5 | 10 |
| E | 260 | 270 |

Beispiel 2

500 ml Schlammprobe 2 wurde im Sedimentationsversuch mit 80 ml Polymerlösung versetzt und 10 sec geschert. Nach 1 Minute Sedimentationszeit ergaben sich folgende Volumina geklärten Wassers:

| Polymer | Volumen [ml] geklärtes Wasser |
|---|---|
| A | 180 |
| D | 270 |
| E | 260 |
| F | 220 |
| G | 10 |
| ohne | 0 |

Beispiel 3

In einem Entwässerungsversuch nach der Siebtestmethode wurden mit der Schlammprobe 1 bei Zusatz von Polymer in einer Konzentration von 100 g TS/$m^3$ Schlamm folgende Ergebnisse erreicht:

| Polymer | Klärkeil | Zeit [sec] für 200 ml Filtrat |
|---|---|---|
| A | 46 | 167 |
| B | 46 | 52 |
| D | 46 | 18 |
| E | 46 | 6 |
| F | 46 | 6 |
| G | 46 | 11 |

Erhöht man die Zugabe des Flockungsmittels auf 300 g TS/$m^3$ Schlamm, so ergibt sich

| Polymer | Klärkeil | Zeit [sec] für 200 ml Filtrat |
|---|---|---|
| D | 31 | 5 |
| E | 27 | 15 |
| F | 22 | 31 |
| G | 21 | 102 |

Beispiel 4

500 ml Schlammprobe 1 wurde im Sedimentationsversuch mit 40 ml Polymerlösung versetzt und 10 sec geschert. Nach 1 Minute Sedimentationszeit ergaben sich folgende Volumina geklärten Wassers:

| Polymer | Volumen [ml] geklärtes Wasser |
|---|---|
| B | 60 |
| D | 140 |
| E | 150 |
| F | 150 |
| G | 160 |
| ohne | 0 |

Bei erhöhter Scherung (30 sec Rührzeit) erweisen sich die erfindungsgemäß durchgeführten Flockungen als äußerst stabil:

| Polymer | Volumen [ml] geklärtes Wasser |
|---|---|
| B | 10 |
| E | 160 |

Beispiel 5

500 ml Schlammprobe 1 wurde im Sedimentationsversuch mit 80 ml Polymerlösung versetzt und 10 sec geschert. Nach 1 Minute Sedimentationszeit ergaben sich folgende Volumina geklärten Wassers:

| Polymer | Volumen [ml] geklärtes Wasser |
|---|---|
| B | 100 |
| D | 190 |
| E | 190 |
| F | 180 |
| G | 130 |

(fortgesetzt)

| Polymer | Volumen [ml] geklärtes Wasser |
|---------|-------------------------------|
| ohne | 0 |

Beispiel 6

In eine senkrecht aufgestellte Plexiglasröhre von 80 mm Durchmesser und 500 mm Länge, die an der Unterseite mit einem 200 $\mu$m Sieb abgedeckt ist, werden 500 ml Sand eingespült.

1000 ml feinteiliger Baggerschlamm aus Bremerhaven mit 15,3 % Feststoffgehalt und einer Dichte von 1,10 t/m$^3$ werden mit 160 ml einer 0,25%igen Lösung von Polymer E in Polderwasser vermischt und bei 1000 Upm für 10 sec mit einem 4-Fingerrührer konditioniert.

Von dieser Mischung werden 1000 ml in die Plexiglasröhre gefüllt und das Entwässerungsverhalten sowie die Schlammdichte bestimmt:

| Versuchsdauer [h] | 1 | 2 | 4 | 7 | 24 |
|-------------------|-----|-----|-----|-----|-----|
| **Filtrat [g]** | 616 | 672 | 702 | 727 | 739 |
| **Dichte [t/m$^3$]** | 1,20 | 1,23 | 1,25 | 1,26 | 1,27 |

**Patentansprüche**

1. Verfahren zur Entwässerung von Schlamm, bei welchem der Schlamm

   - durch Zugabe von Wasser auf eine Dichte von 1,04 t/m$^3$ bis 1,15 t/m$^3$ eingestellt wird;
   - durch eine Rohrleitung in ein Entwässerungsfeld gespült wird;
   - während der Förderung mit einer wässrigen Lösung eines polymeren Flockungsmittels versetzt wird;
   - im Entwässerungsfeld sedimentiert und von Überstands- und/oder Drainage-Wasser teilweise befreit und anschließend einer natürlichen Verdunstungstrocknung unterzogen wird;

   wobei die Flockung mit einem wasserlöslichen, anionischen polymeren Flockungsmittel mit einem Anteil anionischer Monomerbestandteile von 5 bis 30 Gew.% durchgeführt wird.

2. Verfahren nach Anspruch 1, **dadurch gekennzeichnet, dass** das anionische polymere Flockungsmittel aus anionischen und nichtionischen Monomeren aufgebaut ist und als anionische Monomere Acrylsäure, Methacrylsäure, Itaconsäure, Maleinsäure, Fumarsäure, Vinylsulfonsäure, Acrylamidoalkansuffonsäuren, Vinylphosphonsäure und/ oder deren Salze mit Alkalien, Ammoniak, (Alkyl)Aminen- oder Alkanolaminen, oder Gemische dieser Monomeren verwendet werden und dass als nichtionische Monomere Acrylamid, Methacrylamid, Acrylnitril, Hydroxyalkylester der Acryl- und Methacrylsäure, Vinylpyrrolidon oder Vinylacetamid oder Gemische dieser Monomeren verwendet werden.

3. Verfahren nach Anspruch 1 und 2, **dadurch gekennzeichnet, dass** als polymeres Flockungsmittel ein Polyacrylamid, aufgebaut aus polymerisierten Acrylamid-und Acrylsäureeinheiten verwendet wird.

4. Verfahren nach Anspruch 1 bis 3, **dadurch gekennzeichnet, dass** das polymere Flockungsmittel 10 bis 20 Gew. % einpolymerisierte anionische Monomerbestandteile enthält.

5. Verfahren nach Anspruch 1 bis 4, **dadurch gekennzeichnet, dass** das polymere Flockungsmittel ein mittleres Molekulargewicht $M_w$ von größer 1,0x10$^7$ aufweist.

6. Verfahren nach Anspruch 1 bis 5, **dadurch gekennzeichnet, dass** mindestens zwei verschiedene anionische Flockungsmittel verwendet werden.

7. Verfahren nach Anspruch 1 bis 6, **dadurch gekennzeichnet, dass** das polymere Flockungsmittel bezogen auf den Feststoffgehalt des Schlammes in einer Menge von 0,02 Gew.% bis 2 Gew.% zugesetzt wird.

8. Verfahren nach Anspruch 1 bis 7, **dadurch gekennzeichnet, dass** das polymere Flockungsmittel in Form einer wässrigen Lösung in einer Konzentration von kleiner 2 Gew. % eingesetzt wird.

9. Verfahren nach Anspruch 8, **dadurch gekennzeichnet, dass** die Polymerlösung aus einem pulverförmigen Polymer zubereitet wird.

10. Verfahren nach Anspruch 1 bis 9, **dadurch gekennzeichnet, dass** der zu behandelnde Schlamm aus Flüssen, Häfen, vom Meeresboden oder aus dem Watt gewonnen wurde.

11. Verfahren nach Anspruch 1 bis 10, **dadurch gekennzeichnet, dass** der zu entwässernde Schlamm mindestens 50 Gew.% Feinanteile von kleiner oder gleich 0,06 mm enthält.

12. Verfahren nach Anspruch 1 bis 11, **dadurch gekennzeichnet, dass** die Flockungsmittellösung in die Rohrleitung auf einer Strecke zwischen dem Auslass in das Entwässerungsfeld und 150 m davor eindosiert wird.

13. Verfahren nach Anspruch 1 bis 12, **dadurch gekennzeichnet, dass** eine Messeinrichtung in der Rohrleitung die Schlammkonzentration bestimmt, daraus die Flockungsmittelmenge berechnet und die Dosierung der Flockungsmittellösung einleitet.

14. Verfahren nach Anspruch 1 bis 13, **dadurch gekennzeichnet, dass** der mit dem Flockungsmittel behandelte Schlamm nach der Entwässerung und vor der natürlichen Verdunstungstrocknung eine Dichte von 1,25 $t/m^3$ bis 1,35 $t/m^3$ aufweist.

15. Verfahren nach Anspruch 1 bis 14, **dadurch gekennzeichnet, dass** die natürliche Verdunstungstrocknung durch mechanisches Umschichten des Schlammes beschleunigt wird.

16. Verfahren nach Anspruch 15, **dadurch gekennzeichnet, dass** die mechanische Umschichtung mittels Fräsen erfolgt.

17. Verfahren nach Anspruch 1 bis 16, **dadurch gekennzeichnet, dass** die Verdunstungstrocknung des Schlammes bis zu einer Dichte von mindestens 1,45 $t/m^3$ fortgesetzt wird.

18. Verfahren nach Anspruch 17, **dadurch gekennzeichnet, dass** der Schlamm eine Flügelscherfestigkeit von größer 25 $kN/m^2$ aufweist.

19. Verfahren nach Anspruch 1 bis 18, **dadurch gekennzeichnet, dass** der entwässerte und getrocknete Schlamm mit Tonen und/oder Kalkhydrat und/oder Zement in Mengen von jeweils 1 bis 15 Gew.% vermischt wird.

**Claims**

1. Method for the dewatering of sludge, in which the sludge

    - is adjusted by addition of water to a density of 1.04 $t/m^3$ to 1.15 $t/m^3$;
    - is flushed through a pipeline into a dewatering field;
    - in the course of being conveyed, is admixed with an aqueous solution of a polymeric flocculating agent;
    - is sedimented in the dewatering field and freed partly from supernatant water and/or drainage water, and then subjected to natural evaporative drying;

    the flocculation being carried out with a watersoluble, anionic polymeric flocculating agent having a fraction of anionic monomer constituents of 5% to 30% by weight.

2. Method according to Claim 1, **characterized in that** the anionic polymeric flocculating agent is composed of anionic and nonionic monomers, and anionic monomers used are acrylic acid, methacrylic acid, itaconic acid, maleic acid, fumaric acid, vinylsulphonic acid, acrylamidoalkanesulphonic acids, vinylphosphonic acid and/or salts thereof with alkalis, ammonia, (alkyl)amines or alkanolamines, or mixtures of these monomers, and nonionic monomers used are acrylamide, methacrylamide, acrylonitrile, hydroxyalkyl esters of acrylic and methacrylic acid, vinylpyrrolidone or vinylacetamide or mixtures of these monomers.

3. Method according to Claim 1 or 2, **characterized in that** a polyacrylamide composed of polymerized acrylamide units and acrylic acid units is used as polymeric flocculating agent.

4. Method according to Claims 1 to 3, **characterized in that** the polymeric flocculating agent contains 10% to 20% by weight of copolymerized anionic monomer constituents.

5. Method according to Claims 1 to 4, **characterized in that** the polymeric flocculating agent has an average molecular weight $M_w$ of greater than $1.0 \times 10^7$.

6. Method according to Claims 1 to 5, **characterized in that** at least two different anionic flocculating agents are used.

7. Method according to Claims 1 to 6, **characterized in that** the polymeric flocculating agent is added in an amount of 0.02% to 2% by weight, based on the solids content of the sludge.

8. Method according to Claims 1 to 7, **characterized in that** the polymeric flocculating agent is used in the form of an aqueous solution in a concentration of less than 2% by weight.

9. Method according to Claim 8, **characterized in that** the polymer solution is prepared from a powdery polymer.

10. Method according to Claims 1 to 9, **characterized in that** the sludge to be treated has been obtained from rivers, harbours, the sea floor or sand banks.

11. Method according to Claims 1 to 10, **characterized in that** the sludge to be dewatered contains at least 50% by weight of fine fractions of less than or equal to 0.06 mm.

12. Method according to Claims 1 to 11, **characterized in that** the flocculating agent solution is metered into the pipeline over a section between the outlet to the dewatering field and 150 m ahead of the outlet.

13. Method according to Claims 1 to 12, **characterized in that** a measuring device in the pipeline determines the sludge concentration, calculates the quantity of flocculating, agent therefrom and initiates metering of the flocculating agent solution.

14. Method according to Claims 1 to 13, **characterized in that** the sludge treated with the flocculating agent has a density of 1.25 t/m$^3$ to 1.35 t/m$^3$ after dewatering and before natural evaporative drying.

15. Method according to Claims 1 to 14, **characterized in that** the natural evaporative drying is accelerated by mechanical turning of the sludge.

16. Method according to Claim 15, **characterized in that** the mechanical turning is achieved by means of rotary hoes.

17. Method according to Claims 1 to 16, **characterized in that** the evaporative drying of the sludge is continued to a density of at least 1.45 t/m$^3$.

18. Method according to Claim 17, **characterized in that** the sludge has a vane shear strength of greater than 25 kN/m$^2$.

19. Method according to Claims 1 to 18, **characterized in that** the dewatered and dried sludge is mixed with clays and/or slaked lime and/or cement in amounts of 1% to 15% by weight each.

**Revendications**

1. Procédé pour la déshydratation de boues, dans lequel les boues

   - sont, par addition d'eau, ajustées à une masse volumique de 1,04 à 1,15 t/m$^3$ ;
   - sont, par une tuyauterie, évacuées vers une aire de drainage ;
   - pendant le refoulement, sont additionnées d'une solution aqueuse d'un floculant polymère ;
   - sont sédimentées dans l'aire de drainage et sont partiellement débarrassées de l'eau surnageante et/ou de l'eau de drainage, puis sont soumises à un séchage par évaporation naturelle ;

la floculation étant mise en oeuvre avec un floculant polymère anionique, soluble dans l'eau, ayant une teneur en constituants monomères anioniques de 5 à 30 % en poids.

2. Procédé selon la revendication 1, **caractérisé en ce que** le floculant polymère anionique est constitué de monomères anioniques et non ioniques, et que l'on utilise en tant que monomères anioniques l'acide acrylique, l'acide méthacrylique, l'acide itaconique, l'acide maléique, l'acide fumarique, l'acide vinylsulfonique, les acides acrylamidoalcanesulfoniques, l'acide vinylphosphonique et/ou leurs sels avec des alcalis, de l'ammoniac, des (alkyl)amines ou des alcanolamines, ou les mélanges de ces monomères, et que l'on utilise en tant que monomères non ioniques l'acrylamide, le méthacrylamide, l'acrylonitrile, les esters hydroxyalkyliques de l'acide acrylique et de l'acide méthacrylique, la vinylpyrrolidone ou le vinylacétamide, ou les mélanges de ces monomères.

3. Procédé selon les revendications 1 et 2, **caractérisé en ce qu'**on utilise en tant que floculant polymère un polyacrylamide constitué d'unités acrylamide et acide acrylique polymérisées.

4. Procédé selon les revendications 1 à 3, **caractérisé en ce que** le floculant polymère contient, polymérisés, 10 à 20 % en poids de constituants monomères anioniques.

5. Procédé selon les revendications 1 à 4, **caractérisé en ce que** le floculant polymère présente une masse moléculaire moyenne $M_w$ supérieure à $1{,}0 \times 10^7$.

6. Procédé selon les revendications 1 à 5, **caractérisé en ce qu'**au moins deux floculants anioniques différents sont utilisés.

7. Procédé selon les revendications 1 à 6, **caractérisé en ce que** le floculant polymère est ajouté en une quantité, rapportée à l'extrait sec des boues, de 0,02 à 2 % en poids.

8. Procédé selon les revendications 1 à 7, **caractérisé en ce que** le floculant polymère est utilisé sous forme d'une solution aqueuse à une concentration inférieure à 2 % en poids.

9. Procédé selon la revendication 8, **caractérisé en ce que** la solution du polymère est préparée à partir d'un polymère en poudre.

10. Procédé selon les revendications 1 à 9, **caractérisé en ce que** les boues devant être traitées sont obtenues à partir de cours d'eau, de ports, des fonds marins ou de l'estran.

11. Procédé selon les revendications 1 à 10, **caractérisé en ce que** les boues devant être déshydratées contiennent au moins 50 % en poids de fines ayant une granulométrie inférieure ou égale à 0,06 mm.

12. Procédé selon les revendications 1 à 11, **caractérisé en ce que** la solution du floculant est injectée dans la tuyauterie sur un tronçon situé entre le point de déversement dans l'aire de drainage et 150 m en amont de ce point.

13. Procédé selon les revendications 1 à 12, **caractérisé en ce qu'**un dispositif de mesure, disposé dans la tuyauterie, détermine la concentration des boues et, à partir d'elle, calcule la quantité de floculant et déclenche le dosage de la solution de floculant.

14. Procédé selon les revendications 1 à 13, **caractérisé en ce que** les boues traitées par le floculant présentent, après la déshydratation et avant le séchage par évaporation naturelle, une masse volumique de 1,25 à 1,35 t/m$^3$.

15. Procédé selon les revendications 1 à 14, **caractérisé en ce que** le séchage par évaporation naturelle est accéléré par une déstratification mécanique des boues.

16. Procédé selon la revendication 15, **caractérisé en ce que** la déstratification mécanique a lieu par fraisage.

17. Procédé selon les revendications 1 à 16, **caractérisé en ce que** le séchage des boues par évaporation se poursuit jusqu'à une masse volumique d'au moins 1,45 t/m$^3$.

18. Procédé selon la revendication 17, **caractérisé en ce que** les boues présentent une résistance au cisaillement au scissomètre supérieure à 25 kN/m$^2$.

**19.** Procédé selon les revendications 1 à 18, **caractérisé en ce que** les boues déshydratées et séchées sont mélangées à des argiles et/ou à de l'hydrate de chaux et/ou à du ciment, chacun en des quantités de 1 à 15 % en poids.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1116290 A
- DE 19726899 A1
- US 3312070 A
- EP 346159 A1
- EP 0500199 B1
- US 5462672 A
- EP 0500199 A

**In der Beschreibung aufgeführte Nicht-Patentliteratur**

- **Fritz Gehbauer.** Institut für Maschinenwesen im Baubetrieb. 29